# EUROPÄISCHE PATENTSCHRIFT

(11) **EP 2 606 557 B1**
(45) Veröffentlichungstag und Bekanntmachung des Hinweises auf die Patenterteilung: **19.06.2019**
(21) Anmeldenummer: 11733873.1
(22) Anmeldetag: 19.07.2011
(51) Int. Cl.: H02K 3/52, H02K 1/16

(54) **STATOR EINER ELEKTRISCHEN MASCHINE**
STATOR OF AN ELECTRICAL MACHINE
STATOR D'UN MOTEUR ÉLECTRIQUE

(30) Priorität: 16.12.2010 DE 102010063304; 20.10.2010 DE 102010042663; 17.08.2010 DE 102010039393
(43) Veröffentlichungstag der Anmeldung: 26.06.2013
(73) Patentinhaber: Robert Bosch GmbH, 70442 Stuttgart (DE)
(72) Erfinder: MARSCHALL, Peter, H-3711 Szirmabenenyö (HU)
(86) Internationale Anmeldenummer: PCT/EP2011/062372
(87) Internationale Veröffentlichungsnummer: WO 2012/022566

(56) Entgegenhaltungen:
- DE-A1-102007 038 988
- DE-A1-102009 023 231
- DE-U1- 20 204 507
- JP-A- 4 017 541
- US-A- 4 633 114

## Beschreibung

### Stand der Technik

Die Erfindung geht aus von einem Stator einer elektrischen Maschine nach der Gattung des Hauptanspruchs.

Es ist schon ein Stator einer elektrischen Maschine aus der US 2009/0140599 A1 bekannt, mit einem Statorpaket, am Statorpaket befestigten Spulenkörpern, die jeweils eine elektrische Spule aufweisen. Die Spulenkörper sind jeweils auf einen Zahn des Statorpaketes aufgepresst, wobei an den Zähnen des Statorpaketes konvexe Ausbuchtungen vorgesehen sind, die die Pressung erzeugen. Nachteilig ist, dass die konvexen Ausbuchtungen aufwendig herzustellen sind. Außerdem erzeugen die konvexen Ausbuchtungen eine erhöhte mechanische Belastung am Spulenkörper, was zu einer Mikrorissbildung am Spulenkörper und damit zu einem elektrischen Durchschlag führen kann. Aus DE 10 2007 038988 A, DE 202 04 507 U, US4 633 114 A, JP 04 017541 A sind ähnliche Befestigungen von Spulenkörpern am Statorpaket bekannt.

### Vorteile der Erfindung

Der erfindungsgemäße Stator einer elektrischen Maschine mit den kennzeichnenden Merkmalen des Hauptanspruchs hat demgegenüber den Vorteil, dass keine mechanische Belastung des Spulenkörpers durch seine Befestigung am Statorpaket auftritt, indem an den beiden Stirnseiten des Statorpakets jeweils ein Befestigungselement vorgesehen ist, der Befestigungsmittel aufweist, die mit den Spulenkörpern form- und/oder kraftschlüssig zusammenwirken.

Durch die in den Unteransprüchen aufgeführten Maßnahmen sind vorteilhafte Weiterbildungen und Verbesserungen des im Hauptanspruch angegebenen Stators möglich.

Besonders vorteilhaft ist, wenn das Befestigungselement lamellenförmig ausgeführt ist, da auf diese Weise eine bauraumsparende Befestigung erreicht ist.

Weiterhin vorteilhaft ist, wenn das Befestigungselement aus einem elektrisch isolierenden Material, insbesondere Kunststoff, hergestellt ist, da auf diese Weise eine einfache Isolierung des Statorpaketes gegenüber einem nahe am Statorpaket entlang geführten Kabelstrang einer elektrischen Phase erreicht wird. Außerdem kann eine Rastverbindung bei geeigneter Ausgestaltung wieder entriegelt und eine Demontage ohne Abnutzungserscheinung an den Bauteilen ermöglicht werden. Dadurch können Statoren ohne Wertschöpfungsverlust vor dem Imprägnieren repariert werden, wenn Beschädigungen an den Spulen oder der Verschaltung aufgetreten sind.

Die Verbindung zwischen dem Befestigungselement und dem Spulenkörper ist jeweils eine Rastverbindung, die eine Rastfeder und einen Rasthaken aufweist, da eine Rastverbindung eine sehr einfache Montage der Spulenkörper auf dem Statorpaket ermöglicht. Die Herstellungskosten des Stators werden auf diese Weise verringert.

Vorteilhaft ist, wenn die Rastfeder an dem Befestigungselement und der Rasthaken an dem Spulenkörper vorgesehen ist, da die elastisch federnde Rastfeder einfacher an einem separaten Bauteil als an einem Verbundteil wie der gewickelten Spule oder dem Statorpaket realisierbar ist.

Das Befestigungselement weist radial nach innen vorstehende Laschen auf, die zumindest eine Rastfeder oder zumindest einen Rasthaken aufweisen, da die Laschen auf diese Weise in den Spulenkörper hineinragen und mit dem Spulenkörper eine Rastverbindung eingehen können.

Darüber hinaus vorteilhaft ist, wenn der dem Spulenkörper zugewandte Innenumfang des Befestigungselements vieleckig bzw. polygonal ausgeführt ist, wobei die Laschen an dem polygonalen Innenumfang vorgesehen sind, da der aufgesteckte Spulenkörper auf diese Weise eben an dem Befestigungselement und dem Statorpaket zum Anliegen kommen kann und keine Bogenform am Spulenkörper ausgebildet werden muss.

Außerdem vorteilhaft ist, wenn eine Lasche des einen Befestigungselementes auf der einen Seite und eine Lasche des anderen Befestigungselementes auf der anderen Seite in den Spulenkörper hineinragen, wobei der Spulenkörper an seinen den Laschen zugewandten Innenseiten jeweils einen Rasthaken aufweist. Auf diese Weise wird der Spulenkörper an jeder Stirnseite des Statorpakets mit einer Rastverbindung zuverlässig befestigt.

Außerdem vorteilhaft ist, wenn das Befestigungselement zumindest einen vorstehenden Stift aufweist, der formschlüssig mit dem Statorpaket zusammenwirkt, da auf diese Weise eine Ausrichtung des Befestigungselementes hinsichtlich der Umfangsposition erreicht wird. Der Stift greift jeweils in eine Bohrung oder Nut des Statorpaketes ein.

### Zeichnung

Ein Ausführungsbeispiel der Erfindung ist in der Zeichnung vereinfacht dargestellt und in der nachfolgenden Beschreibung näher erläutert.
- Fig.1: zeigt eine Schnittansicht des erfindungsgemäßen Stators,
- Fig.2: eine Teilansicht des Statorpaketes mit einem erfindungsgemäßen Befestigungselement und
- Fig.3: eine Ansicht des erfindungsgemäßen Befestigungselements.

### Beschreibung des Ausführungsbeispiels

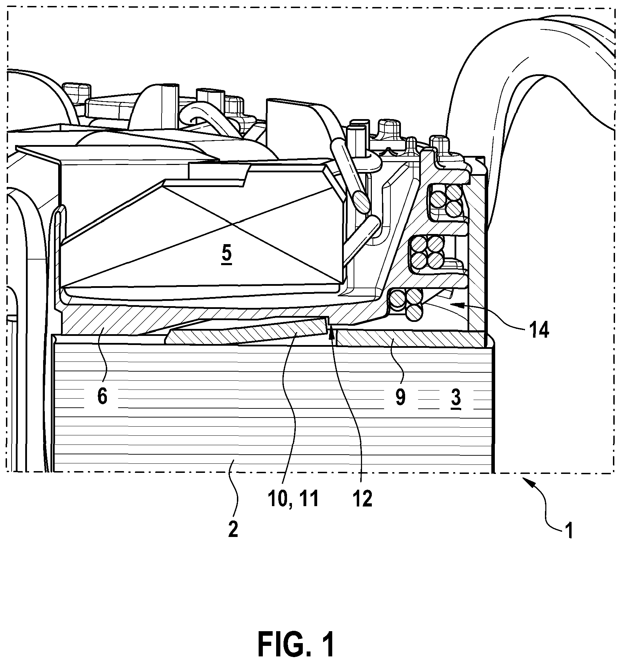

Fig.1 zeigt im Schnitt eine Teilansicht des erfindungsgemäßen Stators.

Der Stator 1 ist Teil einer elektrischen Maschine, insbesondere eines elektrischen Motors oder Generators, und umfasst ein Statorpaket 2 aus übereinander geschichteten Elektroblechen. Das Statorpaket 2 hat einen Kranz von Zähnen 3, zwischen denen Zwischenräume bzw. Nuten 4 ausgebildet sind. An den Zähnen 3 sind elektrische Spulen 5 als sogenannte Einzelzahnspulen vorgesehen, die bei elektrischer Bestromung ein Magnetfeld erzeugen. Die elektrischen Spulen 5 sind jeweils auf Spulenkörpern 6 vorgesehen, die auf die Zähne 3 gesteckt sind und eine Aufnahme für eine elektrische Spule 5 haben. Die elektrischen Spulen 5 umgeben die Zähne 3 mit ihren Wicklungen und füllen die Nuten 4 zumindest teilweise aus.

Erfindungsgemäß ist vorgesehen, dass an den beiden Stirnseiten des zylinderförmigen Statorpakets 2 jeweils ein Befestigungselement 9 vorgesehen ist, das mit dem Statorpaket 2 mechanisch verbunden ist und Befestigungsmittel 10 aufweist, die mit den Spulenkörpern 6 form- und/oder kraftschlüssig zusammenwirken.

Das Befestigungselement 9 ist beispielsweise lamellenförmig oder flachbandförmig ausgeführt und hat einen flachen rechteckförmigen Querschnitt. Das Befestigungselement 9 ist gemäß dem Ausführungsbeispiel aus einem elektrisch isolierenden Material, insbesondere Kunststoff, beispielsweise Polyphenylensulfid (PPS), hergestellt. Auf diese Weise wird eine einfache elektrische Isolierung des Statorpaketes 2 gegenüber einem nahe am Statorpaket 2 entlang geführten elektrischen Verbindung 14 einer elektrischen Phase der elektrischen Maschine erreicht wird. Die elektrische Verbindung 14 ist beispielsweise ein Kabelstrang aus mehreren Drähten, die mit einer der elektrischen Spulen 5 und der ihr zugeordneten elektrischen Phase verbunden sind.

Die Verbindung 14 kann aber auch eine schienenförmige oder andere elektrische Verbindung sein. Alternativ kann das Befestigungselement 9 auch aus einem elektrisch leitenden Material, beispielsweise Metall, hergestellt sein, wenn das Statorpaket 2 auf andere Weise als durch das Befestigungselement 9 gegenüber der elektrischen Verbindung 14 isoliert ist.

Die Verbindung zwischen den Befestigungselementen 9 und dem Spulenkörper 6 ist gemäß dem Ausführungsbeispiel eine Rastverbindung, die eine Rastfeder 11 und einen Rasthaken 12 aufweist. Unter einem Rasthaken 12 wird ein starrer Hinterschnitt verstanden, hinter dem die Rastfeder 11 formschlüssig einfedert und/oder einrastet, wodurch die Verbindung geschlossen wird.

Die Rastfeder 11 kann wie in dem Ausführungsbeispiel an dem Befestigungselement 9 und der Rasthaken 12 an dem Spulenkörper 6 vorgesehen sein, aber auch umgekehrt. Das Befestigungselement 9 weist radial nach innen vorstehende Laschen 15 auf, an denen wie im Ausführungsbeispiel jeweils eine Rastfeder 11 ausgebildet ist, die aber auch einen Rasthaken 12 haben können. Die Laschen 15 werden durch einen auskragenden Steg 16 gebildet, der eine Ausnehmung 17 aufweist, in die die Rastfeder 11 zungenförmig hineinragt. Die Rastfeder 11 ist einstückig mit dem Steg 16 verbunden. Anstatt den zungenförmigen Rastfedern 11 können an den Laschen 15 auch in Richtung Rasthaken 12 vorstehende, bogenförmige Ausbuchtungen vorgesehen sein, die auch als Rastbuckel bezeichenbar sind und formschlüssig mit dem Rasthaken 12 zusammenwirken. Die Ausbuchtungen sind beispielsweise durch einen Stanzprozess eingeprägt, indem ein quer zur radialen Richtung verlaufender Schlitz in das Material der Lasche eingebracht und am Schlitz angrenzend das Material ausbuchtend umgeformt wird. Die Rastbuckel haben den Vorteil, dass sie sehr hohe Kräfte übertragen können.

Der dem Spulenkörper 6 zugewandte Innenumfang des Befestigungselements 9 ist vieleckig bzw. polygonal ausgeführt ist, wobei die Laschen an dem polygonalen Innenumfang vorgesehen sind, beispielsweise jeweils in der Mitte der Kanten.

Es ragen jeweils eine Lasche 15 des einen Befestigungselementes 9 an der einen Stirnseite und eine Lasche 15 des anderen Befestigungselementes 9 an der anderen Stirnseite des Statorpakets 2 in einen Spulenkörper 6 hinein, wobei der Spulenkörper an seinen den Laschen zugewandten Innenseiten jeweils einen Rasthaken aufweist.

Die Befestigungselemente 9 sind formschlüssig, kraftschlüssig und/oder stoffschlüssig mit dem Statorpaket 2 verbunden. Gemäß dem Ausführungsbeispiel weisen die Befestigungselemente 9 jeweils zumindest einen vorstehenden Stift 18, beispielsweise drei Stifte 18 auf, die formschlüssig mit dem Statorpaket 2 zusammenwirken. Nach dem Ausführungsbeispiel erreichen die Stifte 18 nur einen radialen Formschluss, so dass die Befestigungselemente 9 in radialer Richtung bezüglich des Statorpakets 2 fixiert und nicht verschiebbar sind. In axialer Richtung bezüglich des Statorpakets 2 liegen die Befestigungselemente 9 lose an der Stirnseite des Statorpakets 2 an.

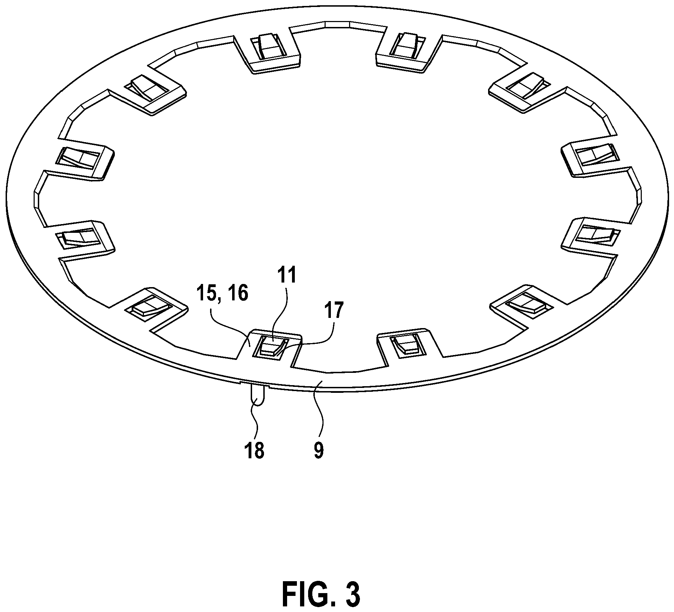

Alternativ zu dem Ausführungsbeispiel nach Fig1. bis Fig.3 kann das Befestigungselement 9 auch durch das oberste bzw. unterste Blech des Statorpakets 2 gebildet sein, wobei das oberste und unterste Blech des Statorpakets 2 an jedem Zahn 3 als Befestigungsmittel 10 eine Ausnehmung aufweist, die jeweils einen Hinterschnitt bildet und jeweils mit einer am Spulenkörper 6 ausgeführten Rastfeder 11 formschlüssig zusammenwirkt. Gemäß diesem zweiten, nicht dargestellten Ausführungsbeispiel kann auf ein zusätzliches lamellenförmiges Befestigungselement 9 wie nach Fig.1 bis Fig.3 verzichtet werden.

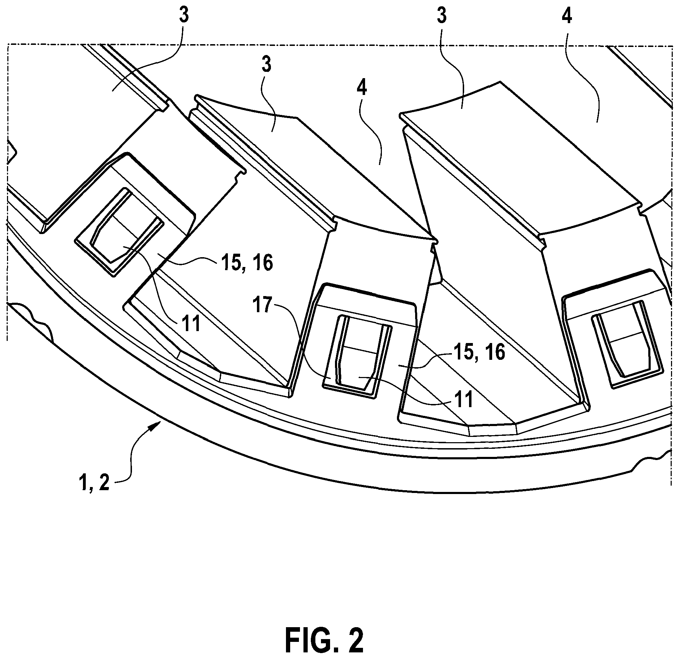

Fig.2 zeigt eine Teilansicht des Statorpaketes mit dem erfindungsgemäßen Befestigungselement. Bei der Ansicht nach Fig.2 sind die gegenüber der Ansicht nach Fig.1 gleichbleibenden oder gleichwirkenden Teile durch die gleichen Bezugszeichen gekennzeichnet.
Fig.3 zeigt eine Ansicht des erfindungsgemäßen Befestigungselements. Bei der Ansicht nach Fig.3 sind die gegenüber der Ansicht nach Fig.1 und Fig.2 gleichbleibenden oder gleichwirkenden Teile durch die gleichen Bezugszeichen gekennzeichnet.

## Patentansprüche

1. Stator einer elektrischen Maschine mit einem Statorpaket (2), am Statorpaket (2) befestigten Spulenkörpern (6), die jeweils eine elektrische Spule (5) aufweisen, an den beiden Stirnseiten des Statorpakets (2) jeweils zumindest ein Befestigungselement (9) vorgesehen ist, das Befestigungsmittel (10) aufweist, die mit den Spulenkörpern (6) form- und/oder kraftschlüssig zusammenwirken, **dadurch gekennzeichnet, dass** das Befestigungselement (9) ringförmig, kreissegmentförmig oder bogenförmig ausgeführt ist und radial nach innen vorstehende Laschen (15) aufweist, die jeweils in einen Spulenkörper (6) hineinragen, wobei die Verbindung zwischen dem Befestigungselement (9) und dem Spulenkörper (6) jeweils eine Rastverbindung ist, die eine Rastfeder (11) und einen Rasthaken (12) aufweist.

2. Stator nach Anspruch 1, **dadurch gekennzeichnet, dass** das Befestigungselement (9) lamellenförmig oder flachbandförmig ausgeführt ist.

3. Stator nach einem der vorhergehenden Ansprüche, **dadurch gekennzeichnet, dass** das Befestigungselement (9) aus einem elektrisch isolierenden Material, insbesondere Kunststoff, oder Metall hergestellt ist.

4. Stator nach Anspruch 1, **dadurch gekennzeichnet, dass** die Rastfeder (11) an dem Befestigungselement (9) und der Rasthaken (12) an dem Spulenkörper (6) vorgesehen ist oder umgekehrt.

5. Stator nach Anspruch 1, **dadurch gekennzeichnet, dass** der dem Spulenkörper (6) zugewandte Innenumfang des Befestigungselementes (9) vieleckig bzw. polygonal ausgeführt ist, wobei die Laschen (15) an dem polygonalen Innenumfang vorgesehen sind.

6. Stator nach Anspruch 1, **dadurch gekennzeichnet, dass** eine Lasche (15) des einen Befestigungselementes (9) an der einen Stirnseite und eine Lasche (15) des anderen Befestigungselementes (9) an der anderen Stirnseite des Statörpakets (2) jeweils in einen Spulenkörper (6) hineinragen, wobei der Spulenkörper (6) an seinen den Laschen (15) zugewandten Innenseiten jeweils einen Rasthaken (12) aufweist.

7. Stator nach einem der vorhergehenden Ansprüche, **dadurch gekennzeichnet, dass** das Befestigungselement (9) vorstehende Stifte (18) aufweist, die formschlüssig mit dem Statorpaket (2) zusammenwirken.

## Claims

1. Stator of an electrical machine comprising a stator core (2), coil formers (6) which are fastened to the stator core (2) and each have an electrical coil (5), at least one fastening element (9) being provided on each of the two end sides of the stator core (2), which fastening element has fastening means (10) which interact with the coil formers (6) in an interlocking and/or force-fitting manner, **characterized in that** the fastening element (9) is designed in the form of a ring, in the form of a segment of a circle or in the form of an arc and has radially inwardly protruding lugs (15) which each protrude into a coil former (6), wherein the connection between the fastening element (9) and the coil former (6) is a respective latching connection which has a latching spring (11) and a latching hook (12).

2. Stator according to Claim 1, **characterized in that** the fastening element (9) is designed in the form of a lamella or in the form of a flat strip.

3. Stator according to either of the preceding claims, **characterized in that** the fastening element (9) is produced from an electrically insulating material, in particular plastic, or metal.

4. Stator according to Claim 1, **characterized in that** the latching spring (11) is provided on the fastening element (9) and the latching hook (12) is provided on the coil former (6), or vice versa.

5. Stator according to Claim 1, **characterized in that** the inner circumference of the fastening element (9), which inner circumference faces the coil former (6), is designed as a polygon, wherein the lugs (15) are provided on the polygonal inner circumference.

6. Stator according to Claim 1, **characterized in that** a lug (15) of one fastening element (9) protrudes from one end side and a lug (15) of the other fastening element (9) protrudes from the other end side of the stator core (2) into a coil former (6) in each case, wherein the coil former (6) has a latching hook (12) on each of its inner sides which face the lugs (15).

7. Stator according to one of the preceding claims, **characterized in that** the fastening element (9) has protruding pins (18) which interact with the stator core (2) in an interlocking manner.

## Revendications

1. Stator d'un moteur électrique comportant un noyau statorique feuilleté (2), des armatures de bobines (6) fixées au noyau statorique feuilleté (2) qui comportent respectivement une bobine électrique (5), au moins un élément de fixation (9) étant prévu sur les deux faces extrêmes de la bobine (2), qui comporte des moyens de fixation (10) coopérant respectivement par complémentarité de forme et/ou de force avec les armatures de bobine (6),
**caractérisé en ce que** l'élément de fixation (9) est réalisé sous forme annulaire, segmentée circulaire ou arquée et présente des pattes (15) dépassant radialement vers l'intérieur qui font chacune saillie dans une armature de bobine (6), dans lequel la liaison entre l'élément de fixation (9) et l'armature de bobine (6) est respectivement une liaison par encliquetage qui comporte un ressort d'encliquetage (11) et un crochet d'encliquetage (12).

2. Stator selon la revendication 1, **caractérisé en ce que** l'élément de fixation (9) est réalisé sous forme lamellaire ou sous forme de bande plate.

3. Stator selon l'une des revendications précédentes, **caractérisé en ce que** l'élément de fixation (9) est constitué d'un matériau électriquement isolant, en particulier une matière plastique ou un métal.

4. Stator selon la revendication 1, **caractérisé en ce que** le ressort d'encliquetage (11) est prévu sur l'élément de fixation (9) et **en ce que** le crochet d'encliquetage (12) est prévu sur l'armature de bobine (6) ou inversement.

5. Stator selon la revendication 1, **caractérisé en ce que** la circonférence intérieure de l'élément de fixation (9) qui est tournée vers l'armature de bobine (6) est réalisée sous forme polygonale, dans lequel les pattes (15) sont prévues sur la circonférence polygonale intérieure.

6. Stator selon la revendication 1, **caractérisé en ce qu'**une patte (15) dudit un élément de fixation (9) présente sur ladite une face frontale et une patte (15) de l'autre élément de fixation (9) présente sur l'autre face frontale du noyau statorique feuilleté (2) font respectivement saillie dans une armature de bobine (6), dans lequel l'armature de bobine (6) présente un crochet d'encliquetage (12) respectif sur ses faces intérieures qui sont tournées vers les pattes (15).

7. Stator selon l'une des revendications précédentes, **caractérisé en ce que** l'élément de fixation (9) présente des broches en saillie (18) qui coopèrent par complémentarité de forme avec le noyau statorique feuilleté (2).
